Europäisches Patentamt

European Patent Office

Office européen des brevets

(19)

(11) **EP 1 221 792 A1**

(12) **DEMANDE DE BREVET EUROPEEN**

(43) Date de publication:
**10.07.2002 Bulletin 2002/28**

(51) Int Cl.[7]: **H04L 25/02**, H04B 1/707

(21) Numéro de dépôt: **01403202.3**

(22) Date de dépôt: **11.12.2001**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **09.01.2001 FR 0100540**

(71) Demandeur: **Thales**
**75008 Paris (FR)**

(72) Inventeurs:
• **Chevalier, Pascal, c/o Thales, Intellect. Property 94117 Arcueil Cédex (FR)**
• **Perros-Meilhac, Lisa, c/o Thales, Intellect. Prop. 94117 Arcueil Cédex (FR)**
• **Moulines, Eric, c/o Thales, Intellect. Property 94117 Arcueil Cédex (FR)**

(54) **Procédé et récepteur autodidacte pour déterminer les paramètres spatio-temporels d'un canal de propagation**

(57) Procédé autodidacte ou partiellement autodidacte pour déterminer les paramètres spatio-temporels caractéristiques d'un canal de propagation dans un système comportant au moins un capteur de réception recevant un signal y(t). Il comporte au moins une étape où la structure de type spéculaire du canal est prise en compte et une étape de détermination conjointe des paramètres, tels que les vecteurs d'antennes (**a**) et/ou les vecteurs temporels (τ) à partir des statistiques d'ordre 2 des signaux reçus.

Application pour la surveillance du spectre d'un canal de propagation à des fins de localisation à partir d'une ou de plusieurs stations en HF ou dans le cadre de liaisons de communication normalisées à l'égalisation ou la localisation ou encore le filtrage spatial.

## Description

La présente invention concerne un procédé et un récepteur permettant l'identification autodidacte des paramètres caractéristiques d'un canal de propagation à partir notamment des statistiques d'ordre 2 du signal reçu par un capteur.

Les paramètres identifiés sont par exemple le retard et l'atténuation des trajets du canal.

L'invention trouve son application notamment dans le domaine des radiocommunications mobiles ou des liaisons ionosphériques en HF.

## Canal spéculaire

Les radiocommunications mobiles ou ionosphériques HF sont sujettes au phénomène de trajets multiples. En zone urbaine, le signal émis est réfléchi et diffracté sur des obstacles fixes ou mobiles présents dans l'environnement. Dans le cas des transmissions HF, les réflexions se font sur les différentes couches de la ionosphère. Dans le cas de canaux de propagation, pouvant être qualifiés de spéculaire, i.e. la transmission s'effectue selon un nombre limité de trajets discrets ou ponctuels caractérisés par un retard et une atténuation complexe. En considérant un temps d'observation compatible avec la durée de stationnarité du canal, une réception multicapteurs et une propagation spéculaire, le canal multi-capteurs a pour expression:

$$\mathbf{c}(t) = \sum_{k=1}^{d} \mathbf{a}_k \, \delta(t - \tau_k) \tag{1}$$

où k est l'indice d'un trajet, $\mathbf{a}_k$ le vecteur dont les composantes sont les atténuations complexes du trajet k pour les différents canaux, $\tau k$ le retard associé à ce kième trajet et d le nombre de trajets dans un canal. En outre, si chaque trajet k est incident sur le réseau suivant un cône de diffusion spatiale réduit, l'expression (1) prend la forme suivante

$$\mathbf{c}(t) = \sum_{k=1}^{d} \beta_k \mathbf{a}(\theta_k)\delta(t - \tau_k) \tag{2}$$

où $\mathbf{a}(\theta_k)$ est le vecteur d'arrivée pour un angle associé au kième trajet et $\beta_k$ l'atténuation complexe du trajet.

Dans le premier cas (Eq. 1), le canal n'est pas paramétré par la direction d'arrivée des trajets, chaque trajet de propagation est paramétré par un temps d'arrivée $\tau$ et un « vecteur d'antennes » $\mathbf{a}$. Ainsi, la calibration n'est plus nécessaire et les algorithmes ne sont plus limités par la dispersion spatiale ou les trajets cohérents.

Dans le deuxième cas (Eq. 2), les trajets sont paramétrés par leurs directions d'arrivée, ce qui suppose que la variété de l'antenne est connue et entraîne donc en général la mise en oeuvre d'une calibration pour estimer les valeurs de $\theta_k$.

## Identification autodidacte

Dans les systèmes actifs ou entraînés, les paramètres du canal sont calculés au cours d'une phase d'apprentissage durant laquelle l'émetteur transmet une séquence connue du récepteur.

Si le canal de propagation fluctue au cours du temps, notamment à cause des mouvements des stations mobiles ou des couches ionosphériques, la séquence doit être émise périodiquement afin de mettre à jour la valeur des paramètres.

Si de tels systèmes sont efficaces, l'émission régulière d'une séquence d'apprentissage peut entraîner une réduction importante du débit efficace.

Par exemple, dans la norme STANAG 4285 pour les transmissions HF ionosphériques coopératives la moitié des symboles transmis sont des symboles d'apprentissage.

L'art antérieur décrit aussi différentes méthodes et systèmes autodidactes, ou systèmes aveugles, dans lesquels, l'estimation des paramètres est effectuée à partir des statistiques du signal reçu, sans connaissance a priori de la séquence d'apprentissage.

## Techniques d'ordre deux

Les techniques proposées utilisent, par exemple, uniquement les statistiques d'ordre deux (matrice de covariance spatio-temporelle) du signal reçu. Par rapport à des algorithmes aux ordres supérieurs, les algorithmes à l'ordre deux ont de meilleures propriétés de convergence, i.e. pour un nombre de symboles donné, la variance des estimateurs à l'ordre deux est en général inférieure à celle des estimateurs aux ordres supérieurs. En autre, elles présentent moins de problèmes locaux des problèmes d'optimisation que les techniques aux ordres supérieurs.

De nombreuses méthodes et algorithmes ont été développés, tels que ceux décrits dans le document ayant pour titre "Multichannel Blind Identification : from subspace to maximum likelihood methods." de L.Tong et S.Perreau ; Proceedings of the IEEE, 86(10) : 1951-1967, October 1998. L'un des inconvénients de ces algorithmes est qu'ils nécessitent la connaissance de la longueur du canal de transmission global et que la plupart ne sont pas du tout robustes à une erreur d'estimation de cette longueur. Or, lorsque la transmission est à bande limitée, la longueur du canal n'est définie qu'approximativement et ces algorithmes ne peuvent être utilisés.

## Etat de l'art en identification paramétrique autodidacte

Les principaux travaux d'identification autodidacte des paramètres caractéristiques de la propagation sont des algorithmes découplés, i.e. estimant indépendamment les temps d'arrivées et les vecteurs d'antennes ou les directions d'arrivée. On peut citer les algorithmes de goniométrie pour l'estimation des directions d'arrivée, les algorithmes de séparation de sources (cohérentes) pour l'estimation des vecteurs d'antennes. Il existe aussi de nombreux travaux concernant l'estimation des temps d'arrivée.

Les méthodes d'estimation conjointes conduisent à améliorer la précision et la résolution des estimateurs permettant par exemple, l'estimation des paramètres même lorsque les retards (ou les angles) sont très proches.

Les principaux travaux d'estimation conjointe autodidacte des paramètres $(\theta,\tau)$ sont présentés, par exemple, dans les références suivantes :

- "Identification spatio-temporelle de canaux de propagation à trajets multiples", de J.Gouffraud, PhD thesis, Ecole Normale Supérieure de Cachan, 1997, ou
- "Improved blind channel identification using a parametric approach" de M.C.Vanderveen et A.Paulraj, IEEE Communications Letters, pages 226-228, August 1998.

L'idée est que les critères utilisés pour l'estimation autodidacte de la réponse impulsionnelle peuvent être minimisés directement en fonction des angles et des retards, par des critères de type sous-espace, tels que décrits dans la référence "Subspace methods for the blind identication of multichannel FIR filters" de E. Moulines, P. Duhamel, J-F.Cardoso et S. Mayrargue, IEEE Trans.on signal Processing, 43(2) : 516-525, February 1995. Ces algorithmes nécessitent la connaissance a priori du filtre d'émission/réception et une calibration de l'antenne.

D'autre part, un exemple de méthode d'estimation conjointe autodidacte des paramètres $(\mathbf{a},\tau)$ est par exemple décrit dans la référence "Methods for blind equalization and resolution of overlapping echoes of unknown shape, de A.Swindlehurst et J.Gunther, IEEE Trans.on Signal Processing, 47(5) : 1245-1254, May 1999. Les auteurs travaillent dans le domaine fréquentiel et proposent un algorithme itératif de type IQML pour approximer la solution du maximum de vraisemblance ainsi qu'un algorithme d'initialisation explicite basé sur l'algorithme ESPRIT. Ces algorithmes ne nécessitent pas la connaissance a priori du filtre d'émission, mais présentent l'inconvénient de nécessiter une transformation de Fourier avant traitement.

L'invention concerne un procédé autodidacte ou partiellement autodidacte permettant de déterminer au moins les paramètres spatio-temporels caractéristiques d'un canal de propagation dans un système comportant au moins un capteur de réception de signaux y(t) caractérisé en ce qu'il comporte au moins une étape où la structure de type spéculaire du canal est prise en compte et une étape de détermination conjointe des paramètres spatio-temporel, tels que les vecteurs d'antenne (**a**) et/ou les vecteurs temporels $(\tau)$ à partir des statistiques d'ordre 2 des signaux reçus sur un ou plusieurs capteurs.

Selon un mode de mise en oeuvre, il comporte une étape où le signal reçu y(t) est suréchantillonné, par exemple avec une période d'échantillonnage correspondant à T/p, où T est la période symbole.

Selon un autre mode de réalisation, le procédé comporte une étape de réception sur au moins deux capteurs et une étape de suréchantillonnage.

Le procédé selon l'invention trouve son application, par exemple, dans le cadre des liaisons normalisées à des fins d'égalisation, de localisation et de filtrage spatial ou dans le cas de la surveillance du spectre d'un canal de propagation, à des fins de localisation à partir d'une ou de plusieurs stations HF.

L'invention présente notamment les avantages suivants :

- il n'est pas nécessaire de transmettre une séquence d'apprentissage pouvant être la cause d'une diminution du débit efficace de transmission, ou de connaître la longueur du canal de transmission globale,
- elle s'avère robuste à la surestimation de l'ordre du canal de transmission.

D'autres avantages et caractéristiques de l'invention apparaîtront à la lecture de la description se référant à la figure unique donnée à titre illustratif et nullement limitatif qui représente le schéma d'un récepteur de radio-communication selon l'invention.

Avant de décrire les étapes du procédé selon l'invention quelques rappels, hypothèses et définitions sont donnés.

**Hypothèses et modèle**

**Le modèle de signal mono-capteur**

Le signal émis est de la forme

$$x(t) = \sum_{l \in \mathbb{Z}} g(t - lT)s(l) \tag{3}$$

où g(t) est le filtre d'émission/réception et {s(l)} sont les symboles d'information qui ont été émis à la période-symbole T.

Le système suppose que la fréquence porteuse et la période symbole ont été estimées de façon préalable. Le signal reçu en bande de base s'écrit

$$y(t) = \sum_{l \in \mathbb{Z}} h(t - lT)s(l) + w(t) \tag{4}$$

où {s(l)} sont les symboles d'information qui ont été émis à la période-symbole T, h(t) est la réponse impulsionnelle du canal de transmission, et w(t) est un bruit additif. Le signal reçu échantillonné à la période-symbole suit le modèle discret :

$$y(k) = y(kT) = \sum_{l \in \mathbb{Z}} h(k - l)s(l) + w(k) \tag{5}$$

où h(l) = h(lT) (en supposant que la phase d'échantillonnage soit égale à 0).

**le système multi-voies**

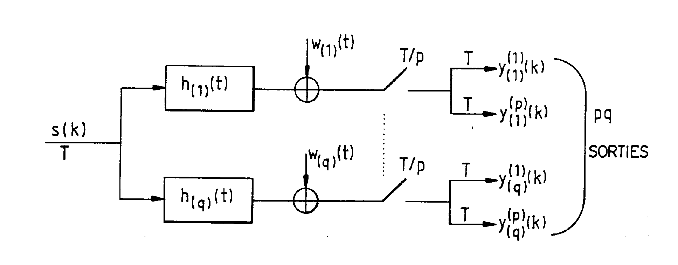

La figure 1 représente un système de réception multi-voies comportant un nombre q de capteurs de réception et un moyen permettant de suréchantillonner le signal s(k) correspondant au trajet d'indice k.

Sans sortir du cadre de l'invention, il est bien entendu que le procédé concerne aussi des récepteurs comportant plusieurs capteurs sans moyen permettant de suréchantillonner ou encore un seul capteur et un moyen de suréchantillonner le signal reçu.

Dans l'exemple de réalisation donné ci-après, le dispositif considéré est un système multi-voies combinant une diversité spatiale et une diversité temporelle, i.e. le signal est reçu sur un réseau de q capteurs Ci ayant chacun une réponse $h_{(i)}(t)$ et il est ensuite suréchantillonné par rapport à la période symbole T, au rythme T/p comme représenté sur la figure 1. Le suréchantillonnage est réalisé au moyen d'un dispositif adapté. La réponse impulsionnelle globale du canal de transmission et le vecteur des observations multi-capteurs sont définis respectivement par les vecteurs colonnes q×1 suivants :

$$h(t) = [h_{(1)}(t),..., h_{(q)}(t)]^T \qquad (6)$$

$$y(t) = [y_{(1)}(t),..., y_{(q)}(t)]^T \qquad (7)$$

L'indice inférieur indique le numéro du capteur et l'exposant T représente la transposée d'une matrice. Les caractères gras indiquent une dimension spatiale. Les échantillons obtenus par échantillonnage au rythme T/p sont vectorisés en rassemblant les signaux échantillonnés sur la même phase d'échantillonnage à l'intérieur d'une période-symbole. Plus précisément, à chacune des p différentes phases d'échantillonnage au rythme symbole est associée une voie, créant ainsi sur chaque capteur un canal multi-voies à p sorties. On obtient ainsi un canal multi-voies à p.q sorties. La réponse impulsionnelle globale du canal de transmission et le vecteur des observations multi-voies sont définis par les vecteurs colonnes p.q $\times$1 suivants :

$$\underline{h}(k) = [h^{(1)}(kT)... h^{(p)}(kT)]^T \qquad (8)$$

$$\underline{y}(k) = [y^{(1)}(kT)... y^{(p)}(kT)]^T \qquad (9)$$

L'indice supérieur indique la phase d'échantillonnage,

$$h^{(i)}(kT) = h(kT +(i - 1)T/p), \quad y^{(i)}(kT) = y(kT + (i - 1)T/p).$$

**Hypothèses**

Le procédé selon l'invention utilise certaines hypothèses notamment les suivantes.

**Source de symboles**

*H 1 -* Le processus { s(k) } est par exemple un bruit blanc complexe qui peut aussi être circulaire au second-ordre de variance unité,

$$E[s(k)] = 0, \quad E[s(k)s(j)^H] = \delta(k - j), \qquad E[s(k)s(j)] = 0 \qquad (10)$$

**Bruit**

*H 2* - Le bruit w(k) est un processus stationnaire blanc spatialement et temporellement, Gaussien, circulaire, de variance $\sigma^2$,

$$E[\underline{w}(k)\underline{w}(k)^H] = \sigma^2 \mathbf{I}pq \qquad (11)$$

avec **I**pq la matrice identité

**Filtre d'émission/réception**

*H 3* - *Le* filtre d'émission/réception g(t) a un support fini, g(t) = 0 pour t $\notin$ [0, LgT[ où Lg correspond à la longueur du filtre et T la période d'échantillonnage.
*H 4 -* Le filtre d'émission/réception g(t) $\leftrightarrow$ G(f) est approximativement à bande limitée, de bande $B_g$

$$G(f) \simeq 0 \ \forall f \notin [-\beta_g, \beta_g] \qquad (12)$$

et G(f) ne s'annule pas dans une certaine bande $\beta$,

$$G(f) \neq 0 \ \forall f \in [-\beta, \beta] \tag{13}$$

**Canal de propagation**

*H 5 -* Le signal est bande étroite pour le réseau de capteurs, i.e. on suppose que le temps de propagation du signal d'un capteur au suivant est très inférieur à l'inverse de la bande du signal.

*H 6 -* Le canal est constant sur l'intervalle d'observation. Le décalage Doppler et les résidus de porteuse sont supposés négligeables.

*H 7-* L'écart temporel entre le premier et le dernier trajet est fini, et on en connaît une borne supérieure : $\Delta\tau_{max}$.

d étant le nombre de trajets et $\tau_k$ le retard et $\mathbf{a}_k$ le vecteur d'antennes de dimension q x 1 associés au kième trajet la réponse du canal s'exprime de la façon suivante.

$$\mathbf{h}(t) = \sum_{k=1}^{d} \mathbf{a}_k . g(t - \tau_k) \tag{14}$$

En échantillonnant à T/p,

$$\mathbf{h}_{\frac{T}{p}}(z) = \sum_{k=-\infty}^{\infty} \mathbf{h}(kT/p)z^{-k} = \sum_{k}^{d} \mathbf{a}_k g_{\frac{T}{p}}(\tau_k; z) \tag{15}$$

où

$$g_{\frac{T}{p}}(\tau; z) \triangleq \sum_{n} g\left(n\frac{T}{p} - \tau\right)z^{-n} \tag{16}$$

est la transformée en z de filtre d'émission/réception décalé de $\tau$ et échantillonné à T/p.
Par ailleurs, $\underline{\mathbf{h}}(z)$ correspond à la réponse en z au rythme symbole du système combiné,

$$\underline{\mathbf{h}}(z) = \sum_{k=-\infty}^{\infty} \underline{\mathbf{h}}(kT)z^{-k} \tag{17}$$

Le signal reçu suit le modèle discret équivalent mono-source multi-sorties :

$$\underline{y}(k) = [h(z)]s(k) + \underline{w}(k) \tag{18}$$

il est intéressant de noter que

$$\mathbf{h}_{\frac{T}{p}}(z) = \sum_{i=1}^{p} \mathbf{h}^{(i)}(z^p)z^{-i} \tag{19}$$

où

$$\mathbf{h}^{(i)}(z) = \sum_{k=-\infty}^{\infty} \mathbf{h}^{(i)}(k) z^{-k}$$

sont les composantes polyphases du canal suréchantillonné.

D'après les hypothèses **H3** et **H7**, la réponse impulsionnelle du canal de transmission global multi-capteurs est à longueur finie. Donc, les réponses discrètes $\underline{h}(z)$ et $\mathbf{h}_{T/p}(z)$ sont de degré fini. Nous notons $L = \deg(\underline{h})$ i.e. au moins une des voies a son degré égal à L, les autres pouvant être de degré inférieur,

$$h(z) = \underline{h}(0) + \underline{h}(1)z^{-1} + ... + \underline{h}(L)z^{-L}$$

De même, nous notons $L_{T/p} = \deg(\mathbf{h}_{T/p})$. On a $pL \leq L_{T/p} \leq p(L+1)-1$. Afin de simplifier la présentation, nous supposons que

$$L_{T/p} + 1 = p(L+1).$$

Par ailleurs, les algorithmes à l'ordre deux sont basés sur la condition de diversité du canal de transmission global suivante :

**H 8** Le vecteur polynômial h(z) est irréductible, i.e. ces composantes n'ont pas de racines communes.

**Quelques notations et outils**

Soient $\{b^{(1)}(z),..., b^{(r)}(z)\}$ r polynômes scalaires, $\mathbf{b}(z) = [b^{(1)}(z), ..., b^{(r)}(z)]^T$ est un vecteur polynomial (un vecteur dont les coordonnées sont des polynômes) de dimension r. On appelle ordre ou degré du vecteur, $\deg(\mathbf{b}(z))$, le degré maximum des polynômes $\{b^{(1)}(z), ..., b^{(r)}(z)\}$. Si $L_b$ est le degré de $\mathbf{b}(z)$, alors

$$\mathbf{b}(z) = \sum_{k=0}^{L_b} \mathbf{b}(k) z^{-k} \qquad (20)$$

où $\mathbf{b}(k) = [b^{(1)}(k),..., b^{(r)}(k)]^T$. Le vecteur associé à $\mathbf{b}(z)$, i.e. contenant l'ensemble de ses coefficients est désigné à l'aide d'une flèche,

$$\vec{b} = [b(0)^T ... b(L_b)^T]^T \qquad (21)$$

est de dimension $r(L_b + 1)$ x 1. Donc, en particulier $\tilde{h}$ correspond au vecteur de dimension $q.p(L+1)$ x1 associé à $\underline{h}(z)$ et $h_{T/p}(z)$ i.e. contenant l'ensemble de leurs coefficients,

$$\vec{h} = [\underline{h}(0)^T ... \underline{h}(L)^T]^T \qquad (22)$$
$$= [h_{\frac{T}{p}}(0)^T ... h_{\frac{T}{p}}(L_{\frac{T}{p}})^T]^T \qquad (23)$$

De plus, soit K un Entier correspondant au nombre d'observations multidimensionnelles, $_K(\mathbf{b})$ est la matrice de Sylvester (i.e. Toeplitz par bloc) de dimension $r(K + 1)$ x $(K + L_b + 1)$ associée au polynôme $\mathbf{b}(z)$, et définie par

$$\mathcal{T}_K(\mathbf{b}) = \begin{bmatrix} \mathbf{b}(0) & \cdots & \mathbf{b}(L_b) & 0 & \cdots & 0 \\ 0 & \mathbf{b}(0) & & \mathbf{b}(L_b) & \ddots & \vdots \\ \vdots & \ddots & \ddots & & \ddots & 0 \\ 0 & \cdots & 0 & \mathbf{b}(0) & \cdots & \mathbf{b}(L_b) \end{bmatrix} \quad (24)$$

Enfin, soit $\mathbf{B}(z)$ une matrice polynomiale de dimension r x D et de degrée $L_b$,

$$B(z) = [b_1(z),..., b_D(z)]$$

où $\mathbf{b}_l(z)$ est un vecteur polynomial de dimension r. Nous notons

$$B = [\vec{b}_1,...,\vec{b}_D]$$

la matrice associée de dimension $r(L_b + 1)$ x D et $D_K(\mathbf{B})$ la matrice de Sylvester par bloc de dimension $r(K + 1)$ x $(K + L_b + 1)D$ définie par

$$D_k(B) = [T_k(b_1), ..., T_k(b_D)] \quad (25)$$

$\lambda_{min}(\mathbf{A})$ désigne la plus petite valeur propre de la matrice $\mathbf{A}$ et $vp_{min}(\mathbf{A})$ le vecteur propre associé à $\lambda_{min}(\mathbf{A})$.

**Procédé selon l'invention**

Le procédé selon l'invention repose notamment sur la prise en compte de la structure de canal de type spéculaire pour déterminer les paramètres spécifiques d'un canal de propagation ou de transmission d'un signal notamment dans un système de communication tel que décrit à la figure 1. Les paramètres déterminés conjointement sont par exemple le vecteur temporel ($\tau$) des vecteurs retards ($\tau_k$) et le vecteur d'antenne (**a**) des vecteurs ($\mathbf{a}_k$).
Une première variante de mise en oeuvre du procédé, ou "procédé a priori", est particulièrement bien adaptée lorsque le filtre d'émission/réception est connu.
Une seconde variante de mise en oeuvre du procédé ou "procédé sans a priori" correspond mieux au cas où les caractéristiques du filtre d'émission/réception ne sont pas connus.

**Procédé avec a priori**

Le procédé suppose que le filtre d'émission g(t) est connu.
Les différentes étapes du procédé ou algorithme avec a priori selon l'invention utilisent le fait que l'équation (15) s'écrit sous forme "vectorielle" de la façon suivante :

$$\vec{h} = G_{L,d}(\tau)a \quad (26)$$

$\vec{h}$ est le vecteur de dimension q.p.(L + 1) contenant l'ensemble des coefficients de la réponse $\mathbf{h}_{T/p}(z)$, **a** est le vecteur de dimension q.d contenant l'ensemble des vecteurs d'antennes $a = [a_1^T...a_d^T]^T$

et $G_{L,d}(\tau)$ est une matrice de dimension q.p(L + 1) x q.d contenant les versions retardées échantillonnées à T/p du filtre d'émission :

$$\mathbf{G}_{L,d}(\boldsymbol{\tau}) = \begin{pmatrix} g(0 - \tau_1) & \cdots & g(0 - \tau_d) \\ g(\frac{T}{p} - \tau_1) & \cdots & g(\frac{T}{p} - \tau_d) \\ \vdots & & \vdots \\ g((L+1)T - \frac{T}{p} - \tau_1) & \cdots & g((L+1)T - \frac{T}{p} - \tau_d) \end{pmatrix} \otimes \mathbf{I}_q \qquad (27)$$

$\mathbf{I}_q$ est la matrice identité de dimension q. Nous notons τ le vecteur de dimension d contenant l'ensemble des retards

$$\tau = [\tau_1, ..., \tau_d]$$

Les différentes étapes du procédé sont par exemple les suivantes :

1. Choisir la longueur du canal global de propagation tenant compte de l'émission et de la réception, $\hat{L} \geq Lg + \Delta\tau_{max}$ et la valeur du nombre d'observations $K \geq L$ avec $\Delta\tau_{max}$ la plus grande valeur possible du retard relatif entre deux trajets.

2. Calculer la matrice $Q_{\hat{L}}(\mathbf{R})$ du critère sous-espace par exemple de la manière suivante :

- Calculer l'estimée empirique de la matrice de covariance :

$$\dot{\mathbf{R}} = \frac{1}{N-K} \sum_{k=0}^{N-K} \vec{\mathbf{y}}_K(k)\vec{\mathbf{y}}_K(k)^H \qquad (28)$$

où

$$\begin{aligned} \vec{\mathbf{y}}_K(k) &= [\mathbf{y}(0)^T \mathbf{y}(T/p)^T \ldots \mathbf{y}(KT - T/p)^T]^T & (29) \\ &= [\underline{\mathbf{y}}(0)^T \ldots \underline{\mathbf{y}}(K)^T]^T_{pq(K+1)} & (30) \end{aligned}$$

et N-K le nombre d'observations indépendantes.

- Construire la matrice $\hat{\mathbf{G}}_{\hat{L}}$ en prenant par exemple les vecteurs propres associés aux pq(K + 1) - (K + $\hat{L}$ + 1) plus petites valeurs propres de R, $\hat{\mathbf{G}}_{\hat{L}}$ peut aussi être obtenue à partir de la décomposition en éléments propres de la matrice des données

$$\mathcal{Y} \triangleq [\vec{\mathbf{y}}(K) \ldots \vec{\mathbf{y}}(N)].)$$

Puis former la matrice de projection

$$\hat{\Pi}_{\hat{L}} = \hat{\mathbf{G}}_{\hat{L}} \hat{\mathbf{G}}_{\hat{L}}^H.$$

- Former la matrice du critère sous-espace

$$\mathbf{Q}_{\hat{L}}(\hat{\mathbf{R}}) = \mathcal{D}_{\hat{L}}(\hat{\Pi}_{\hat{L}})\mathcal{D}_{\hat{L}}(\hat{\Pi}_{\hat{L}})^H.$$

3. Estimer le nombre de trajets $\hat{d}$ par exemple en mettant en oeuvre la méthode décrite par exemple dans la référence "Detection of signais by information theoric criteria" de M. Wax et T. Kailath, IEEE Trans.on Acoust.

Speech and Sig. Proc., 33(2) : 387-392, April 1985.
4. Estimer les retards

$$\hat{\tau} = \arg\min_{\tau} J_{\hat{L},\hat{d}}(\tau)$$

avec

$$J_{\hat{L},\hat{d}}(\tau) = \frac{\lambda_{\min}\left(\mathbf{G}_{\hat{L},\hat{d}}(\tau)^H \mathbf{Q}_{\hat{L}}(\hat{\mathbf{R}})\mathbf{G}_{\hat{L},\hat{d}}(\tau)\right)}{\lambda_{\min}\left(\mathbf{G}_{\hat{L},\hat{d}}(\tau)^H \mathbf{G}_{\hat{L},\hat{d}}(\tau)\right)} \tag{31}$$

Pour ce faire, appliquer le processus itératif décrit ci-dessous :

- Poser d = 1. Obtenir une estimation $\hat{\tau}_1$ de $\tau_{01}$ en minimisant

$$\breve{J}_{\hat{L},\hat{d}}(\tau_1).$$

- Poser d = 2. Obtenir une estimation $\hat{\tau}_2$ de $\tau_{02}$ en minimisant

$$\breve{J}_{\hat{L},\hat{d}}([\tau_1, \tau_2])$$

en fonction de $\tau_2$ et en conservant $\tau_1$ égal à l'estimée $\hat{\tau}_1$ obtenue à la première étape. Puis, obtenir une nouvelle estimation de

$$\left[\tau_{01}, \tau_{02}\right]$$

en mettant en oeuvre une minimisation multidimensionnelle de

$$\breve{J}_{\hat{L},\hat{d}}([\tau_1, \tau_2])$$

en utilisant les valeurs

$$\left[\hat{\tau}_1, \hat{\tau}_2\right]$$

que l'on vient d'obtenir comme valeurs initiales.
- Itérer ce processus jusqu'à ce que d = $d$, pour tous les chemins possibles de manière à obtenir le vecteur des retards.

5. Estimer la valeur du vecteur d'antenne par

$$\hat{\mathbf{a}} = \mathrm{vp_{min}}\left(\mathbf{G}_{\hat{L},\hat{d}}(\hat{\tau})^H \mathbf{Q}_{\hat{L}}(\hat{\mathbf{R}})\mathbf{G}_{\hat{L},\hat{d}}(\hat{\tau})\right).$$

6. Former l'estimée de la réponse impulsionnelle :

$$\tilde{\hat{\mathbf{h}}} = \mathbf{G}_{\hat{L},\hat{d}}(\hat{\tau})\hat{\mathbf{a}}$$

**Procédé sans a priori**

La deuxième variante du procédé correspond à un algorithme d'estimation paramétrique totalement ou en majorité autodidacte. L'algorithme associé tient compte, comme dans la première variante de réalisation du caractère spéculaire du canal de propagation afin de déterminer ses paramètres, notamment le vecteur d'antenne et le vecteur temporel caractéristiques. Contrairement à la première variante, il ne nécessite pas la connaissance a priori du filtre d'émission. Il suppose simplement que le filtre d'émission est à bande limitée et que sa bande est approximativement connue.

Les différentes étapes du procédé ou de l'algorithme sont par exemple les suivantes :

1. Estimer $\hat{Lg}$ la longueur du filtre d'émission, et choisir $\hat{L} \geq \hat{Lg} + \Delta\tau_{\max}$ et $K \geq \hat{L}$.
2. Appliquer la méthode sous-espace décrite au point 2 du procédé avec a priori :

- Estimer la matrice de covariance $\hat{R}$ par exemple en mettant en oeuvre les étapes décrites précédemment correspondant à l'équation (Eq. 28).
- Calculer la matrice de projection sur l'espace bruit

$$\hat{\Pi}_{\hat{L}}$$

à partir des vecteurs propres associés aux $pq(K + 1) - (K + \hat{L} + 1)$ valeurs propres nulles de la matrice $\hat{R}$.
- Former la matrice

$$\mathbf{Q}_{\hat{L}}(\hat{\mathbf{R}}) = \mathcal{D}_{\hat{L}}(\hat{\Pi}_{\hat{L}})\mathcal{D}_{\hat{L}}(\hat{\Pi}_{\hat{L}})^H.$$

- Obtenir $\hat{\vec{h}}$ le vecteur propre associé à la plus petite valeur propre de la matrice $\mathbf{Q}_{\hat{L}}(\hat{\mathbf{R}})$, et former

$$\hat{h}_{\frac{T}{p}}(z).$$

3. Former le nouveau critère paramétrique:

- Choisir la valeur de la longueur du canal

$$R \geq \hat{L}_{\frac{T}{p}} = p(\hat{L} + 1) - 1$$

- et former la matrice

$$T_R(\hat{h}_{\frac{T}{p}}).$$

- Calculer la matrice

$$\hat{\Omega}_{\hat{L}_{\frac{T}{p}}}$$

contenant les vecteurs propres associés aux

$$q(R + 1) - (R + \overset{\wedge}{\underset{\bar{p}}{L_T}} + 1)$$

plus petites valeurs propre de

$$T_R(\overset{\wedge}{\underset{\bar{p}}{h_T}})^H.$$

- Former la matrice

$$\mathcal{D}_{\hat{L}_{\frac{T}{p}}}(\hat{\Omega}_{\hat{L}_{\frac{T}{p}}}).$$

4. Estimer le nombre de trajets $\hat{d}$, par exemple à l'aide de la méthode précédemment référencée pour l'étape 3 de la première variante de réalisation.

5. Déterminer une valeur minimale de la bande du filtre d'émission : β, généralement β = 1/T.

6. Choisir $\tilde{v}$ (t), un filtre continu à bande limitée de bande β. Former le filtre v(t),

$$\begin{cases} v(t) = \tilde{v}(t) & 0 \leq t \leq Lv \leq \hat{L}g \\ v(t) = 0 & \text{ailleurs} \end{cases} \tag{32}$$

7. Estimer les retards

$$\hat{\tau} = \arg\min_{\tau} I_{\hat{L},\hat{d}}(\tau)$$

avec

$$I_{\hat{L},\hat{d}}(\tau) = \frac{\lambda_{\min}\left(V_{\hat{L},\hat{d}}(\tau)^H \mathcal{D}_{\hat{L}_{\frac{T}{p}}}(\hat{\Omega}_{\hat{L}_{\frac{T}{p}}})\mathcal{D}_{\hat{L}_{\frac{T}{p}}}(\hat{\Omega}_{\hat{L}_{\frac{T}{p}}})^H V_{\hat{L},\hat{d}}(\tau)\right)}{\lambda_{\min}\left(V_{\hat{L},\hat{d}}(\tau)^H V_{\hat{L},\hat{d}}(\tau)\right)} \tag{33}$$

en appliquant le processus itératif proposé pour la méthode sous-espace paramétrique. (La matrice

$$V_{\hat{L},\hat{d}}(\tau)$$

est définie de la même façon que la matrice

$$G_{\hat{L},\hat{d}}(\tau)$$

mais à partir du filtre v(t).)

8. Estimer les vecteurs d'antennes :

$$\hat{a} = vp_{\min}\left(V_{\hat{L},\hat{d}}(\hat{\tau})^H \mathcal{D}_{\hat{L}_{\frac{T}{p}}}(\hat{\Omega}_{\hat{L}_{\frac{T}{p}}})\mathcal{D}_{\hat{L}_{\frac{T}{p}}}(\hat{\Omega}_{\hat{L}_{\frac{T}{p}}})^H V_{\hat{L},\hat{d}}(\hat{\tau})\right) \tag{34}$$

### Applications possibles

Le procédé selon l'invention trouve son application, par exemple dans les domaines mentionnés ci-après, donnés à titre illustratif et nullement limitatif.

### Réseaux cellullaires

Dans le contexte des transmissions cellulaires, la norme de transmission est connue. Le filtre d'émission normalisé est donc connu et il est préférable d'appliquer le procédé avec a priori, utilisant la connaissance a priori du filtre d'émission/réception. Les applications potentielles sont les suivantes :

### Egalisation

La propagation joue le rôle d'une convolution temporelle. A l'exception des communications à très bas-débit (quelques centaines de bits/seconde), cette dispersion temporelle induite par la propagation crée de l'interférence entre symboles (IES). Afin de pouvoir récupérer au mieux les symboles transmis, l'effet dispersif du canal doit être compensé par une étape d'égalisation telle que décrite dans l'ouvrage ayant pour titre "Digital Communications", pour auteurs J.G.Proakis, publié aux éditions McGraw Hill, 1989. Si le filtre d'émission/réception est connu, à partir de la connaissance des paramètres du canal de propagation, il est possible de reconstruire la réponse globale puis de mettre en oeuvre une étape d'égalisation. L'intérêt d'une telle approche est qu'en général en estimant les paramètres de la propagation plutôt que la réponse globale, le nombre de paramètres à estimer est réduit, ce qui permet en général de réduire la variance des estimateurs. On peut ainsi améliorer significativement la qualité de l'identification et les performances de l'égalisation. De plus, certains paramètres caractéristiques du canal de propagation (les retards et les angles d'arrivée) évoluent peu d'une trame à l'autre. La modélisation paramétrique offre la possibilité de suivre de façon plus efficace les variations des paramètres du canal et d'améliorer encore la qualité de l'identification. Un exemple de méthode est décrit dans la référence "Multi-channel MLSE equalizer with parametric FIR channel identification" de J.T. Chen et A. Paulraj, In Proc. VTC, pages 710-713, 1997.

### Localisation

La localisation de l'émetteur, problème classique des applications militaires, est devenue récemment d'un grand intérêt pour des applications civiles en communications mobiles. En effet, la localisation des mobiles dans un réseau cellulaire permet de rendre de nombreux services tels que la localisation des appels d'urgence, la gestion de la taxation, la détection des fraudes, l'aide à la planification cellulaire, l'amélioration de la mise en oeuvre du « handover », telle que décrite dans la référence " Position location using wireless communications on highways of the future de T.S.Rappaport, J.H.Reed et B.D.Woerner, IEEE Commun. Mag., October 1996.

Il existe plusieurs techniques de localisation. La plus classique est la triangularisation. Dans ce cas, la localisation est effectuée à l'aide de deux ou trois récepteurs (stations de base) distincts estimant chacun les angles ou/ et les temps d'arrivée du signal émis, selon une méthode telle que celle décrite dans la référence "Mobile Localization in a GSM Network "de H.EI Nahas, PhD thesis ENST, june 1999. Ce système présente toutefois certains inconvénients qui ont poussé au développement d'algorithmes de localisation à partir d'une station unique. Ces techniques de localisation nécessitent toujours la connaissance a priori des caractéristiques de la propagation. Un procédé de localisation est proposé par exemple dans la référence " Procédés de localisation spatio-temporel de radiomobiles en milieu urbain " de M. Chenu-Tournier, A. Ferréol et J-J. Monot, Technical report, TCC, 1997.

### Filtrage d'antenne - SDMA

La connaissance des caractéristiques spatiales des différents trajets peut être utilisée afin de focaliser l'émission dans la direction principale d'arrivée et ainsi de minimiser l'effet des trajets multiples au niveau des récepteurs (uplink beamformer design, downlink transmission design).

### Surveillance du spectre

Dans le contexte de l'analyse radio-électrique du spectre, le récepteur n'a aucune information a priori sur l'émetteur. Le système de réception scrute le spectre, intercepte un signal transmis par un émetteur inconnu, et l'analyse afin d'en extraire certaines informations qui permettront d'écouter l'émission ou de localiser l'émetteur. Dans ce contexte, il est peu probable que l'on connaisse le filtre d'émission, et le procédé sans a priori pour estimer les paramètres du canal de propagation ($\tau$ ; a) est plus adapté. Dans ce cas, le filtre d'émission n'étant pas connu, il n'est pas possible d'égaliser le signal reçu, mais la connaissance des paramètres (τ ; a) permet par exemple la mise en ouvre des applications données ci-dessous.

**Localisation**

La principale application est la localisation. En HF, la localisation à station unique utilise classiquement une étape initiale de prévisions ionosphériques. Connaissant l'angle d'incidence et le profil de la densité électronique (par prévision ionosphérique), une méthode de tracé de rayons utilisant la loi de Descartes permet de reconstituer le trajet de l'onde reçue sur le réseau de capteurs selon l'une des références suivantes :

- "Comparison of the fixing accuracy of single-station location of long range transmitters, de H.C.Höring, IEEE Proceedings, 37(3) : 173-176, June 1990.
- "Ioniospheric modelling in support of single station location of long range transmitters de L.F.McNamara, Journal of Atmospheric and terrestrial Physics, 50(9) : 781-795, 1988.

En outre, la connaissance des temps d'arrivée permet de lever certaines ambiguïtés dues à des multibonds.

**Autres**

La connaissance des vecteurs d'antennes permet de faire du filtrage spatial. La connaissance des retards permet de recombiner les trajets de propagation en phase. L'utilisation d'une des deux connaissances ou leur utilisation conjointe peut constituer une première étape à la mise en oeuvre d'un système d'analyse du signal.

**Revendications**

1. Procédé pour déterminer les paramètres spatio-temporels caractéristiques d'un canal de propagation dans un système comportant au moins un capteur de réception recevant un signal y(t) formé d'un ou de plusieurs trajets **caractérisé en ce que** ledit procédé est autodidacte et **en ce qu'**il comporte au moins une étape de détermination conjointe des paramètres tels que les vecteurs d'antenne (**a**) et/ou les vecteurs temporels (t) à partir des statistiques d'ordre 2 du signal reçu et en tenant compte de la structure de canal de type spéculaire.

2. Procédé selon la revendication 1 **caractérisé en ce qu'**il comporte une étape de suréchantillonnage du signal reçu.

3. Procédé selon la revendication 1 **caractérisé en ce qu'**il comporte une étape où les signaux sont reçus sur au moins deux capteurs et une étape de suréchantillonnage du signal reçu.

4. Procédé selon l'une des revendications 2 et 3 **caractérisé en ce que** la période d'échantillonnage correspond à T/p avec T la période symbole.

5. Procédé selon l'une des revendications 1 à 4 **caractérisé en ce qu'**il comporte au moins les étapes suivantes :
   - choisir la longueur du canal global de propagation $\hat{L} \geq L_g + \Delta\tau_{max}$ et la valeur du nombre d'observation $\hat{K} \geq \hat{L}$. Avec $\Delta\tau_{max}$ la plus grande valeur possible du retard relatif entre deux trajets
   - déterminer la matrice

$$\mathbf{Q}_{\hat{L}}(\hat{\mathbf{R}})$$

   - du critère sous-espace,
   - estimer le nombre de trajets $\hat{d}$,
   - estimer les retards

$$\hat{\tau} = \arg\min_{\tau} J_{\hat{L},\hat{d}}(\tau)$$

$$J_{\hat{L},\hat{d}}(\tau) = \frac{\lambda_{\min}\left(\mathbf{G}_{\hat{L},\hat{d}}(\tau)^H \mathbf{Q}_{\hat{L}}(\hat{\mathbf{R}})\mathbf{G}_{\hat{L},\hat{d}}(\tau)\right)}{\lambda_{\min}\left(\mathbf{G}_{\hat{L},\hat{d}}(\tau)^H \mathbf{G}_{\hat{L},\hat{d}}(\tau)\right)}$$

- estimer la valeur du vecteur d'antenne par

$$\hat{\mathbf{a}} = \mathbf{vp}_{\min}\left(\mathbf{G}_{\hat{L},\hat{d}}(\hat{\tau})^H \mathbf{Q}_{\hat{L}}(\hat{\mathbf{R}})\mathbf{G}_{\hat{L},\hat{d}}(\hat{\tau})\right).$$

- former l'estimée de la réponse impulsionnelle :

$$\hat{\tilde{\mathbf{h}}} = \mathbf{G}_{\hat{L},\hat{d}}(\hat{\tau})\hat{\mathbf{a}}$$

6. Procédé selon l'une des revendications 1 à 4 **caractérisé en ce qu'**il comporte au moins les étapes suivantes:

- Estimer $\hat{L}_g$ la longueur du filtre d'émission, et choisir $\hat{L} \geq \hat{L}g + \Delta\tau_{\max}$ et $K \geq \hat{L}$.
- Appliquer la méthode sous-espace décrite au point 2 du procédé avec a priori :

  - Estimer la matrice de covariance $\hat{R}$.
  - Calculer la matrice de projection sur l'espace bruit

$$\hat{\Pi}_{\hat{L}}$$

  à partir des vecteurs propres associés aux pq(K+1) - (K + $\hat{L}$ + 1) valeurs propres nulles de la matrice $\hat{R}$.
  - Former la matrice

$$\mathbf{Q}_{\hat{L}}(\hat{\mathbf{R}}) = \mathcal{D}_{\hat{L}}(\hat{\Pi}_{\hat{L}})\mathcal{D}_{\hat{L}}(\ddot{\mathbf{\Pi}}_{\hat{L}})^H.$$

  - Obtenir $\hat{\vec{h}}$ le vecteur propre associé à la plus petite valeur propre de la matrice $\mathbf{Q}_{\hat{L}}(\hat{R})$, et former

$$\hat{\mathsf{h}}_{\frac{T}{p}}(z)$$

- Former le nouveau critère paramétrique:

  - Choisir la valeur de la longueur du canal

$$R \geq \hat{L}_{\frac{T}{p}} = p(\hat{L} + 1) - 1$$

  et former la matrice

$$T_R(\hat{\mathsf{h}}_{\frac{T}{p}})$$

  - Calculer la matrice

$$\hat{\Omega}_{\hat{L}_{\frac{T}{p}}}$$

contenant les vecteurs propres associés aux

$$q(R + 1) - (R + \hat{L}\frac{T}{p} + 1)$$

plus petites valeurs propres de $\tau_R$

- Former la matrice

$$\mathcal{D}_{\hat{L}_{\frac{T}{p}}}(\hat{\Omega}_{\hat{L}_{\frac{T}{p}}})$$

- Estimer le nombre de trajets $\hat{d}$,
- Déterminer une valeur minimale de la bande du filtre d'émission : $\beta$
- Choisir $\tilde{v}(t)$, un filtre continu à bande limitée de bande $\beta$. Former le filtre $v(t)$,

$$\begin{cases} v(t) = \tilde{v}(t) & 0 \le t \le Lv \le \hat{L}g \\ v(t) = 0 & \text{ailleurs} \end{cases}$$

- Estimer les retards

$$\hat{\tau} = \arg\min_{\tau} I_{\hat{L},\hat{d}}(\tau)$$

avec

$$I_{\hat{L},\hat{d}}(\tau) = \frac{\lambda_{\min}\left(\mathbf{V}_{\hat{L},\hat{d}}(\tau)^H \mathcal{D}_{\hat{L}_{\frac{T}{p}}}(\hat{\Omega}_{\hat{L}_{\frac{T}{p}}})\mathcal{D}_{\hat{L}_{\frac{T}{p}}}(\hat{\Omega}_{\hat{L}_{\frac{T}{p}}})^H \mathbf{V}_{\hat{L},\hat{d}}(\tau)\right)}{\lambda_{\min}\left(\mathbf{V}_{\hat{L},\hat{d}}(\tau)^H \mathbf{V}_{\hat{L},\hat{d}}(\tau)\right)}$$

- Estimer les vecteurs d'antennes :

$$\hat{a} = \mathrm{vp}_{\min}\left(\mathbf{V}_{\hat{L},\hat{d}}(\hat{\tau})^H \mathcal{D}_{\hat{L}_{\frac{T}{p}}}(\hat{\Omega}_{\hat{L}_{\frac{T}{p}}})\mathcal{D}_{\hat{L}_{\frac{T}{p}}}(\hat{\Omega}_{\hat{L}_{\frac{T}{p}}})^H \mathbf{V}_{\hat{L},\hat{d}}(\hat{\tau})\right)$$

7. Application du procédé selon l'une des revendications 1 à 6 pour la surveillance du spectre d'un canal de propagation à des fins de localisation à partir d'une ou de plusieurs stations en HF.

8. Application du procédé selon l'une des revendications 1 à 6 dans le cadre de liaisons de communication normalisées à l'égalisation ou la localisation ou encore le filtrage spatial.

Office européen
des brevets

**RAPPORT DE RECHERCHE EUROPEENNE**

Numéro de la demande

EP 01 40 3202

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | DESMEZIERES A ET AL: "Polarization in space-time processing for propagation channel identification" 2ND IEEE WORKSHOP ON SIGNAL PROCESSING ADVANCES IN WIRELESS COMMUNICATIONS , 9 - 12 mai 1999, pages 395-398, XP002178929 IEEE, Piscataway, NJ, USA, ISBN: 0-7803-5599-7 * page 395, colonne 1, ligne 14 - ligne 15 * * page 395, colonne 1, ligne 27 - ligne 33 * * page 395, colonne 1, ligne 38 - page 396, colonne 1, ligne 9 * | 1-4,7,8 | H04L25/02 H04B1/707 |
| A | | 5,6 | |
| X | EP 0 926 510 A (THOMSON CSF) 30 juin 1999 (1999-06-30) * page 2, ligne 16 - ligne 31 * * page 3, ligne 50 - ligne 55 * * page 5, ligne 43 * * page 8, ligne 2 - ligne 40 * * revendication 4 * | 1,3,7,8 | |
| A | | 2,4-6 | |

DOMAINES TECHNIQUES RECHERCHES (Int.Cl.7)

H04L
H04B

-/--

Le présent rapport a été établi pour toutes les revendications

| Lieu de la recherche | Date d'achèvement de la recherche | Examinateur |
|---|---|---|
| LA HAYE | 25 mars 2002 | Moreno, M |

**Office européen des brevets**

**RAPPORT DE RECHERCHE EUROPEENNE**

Numéro de la demande

EP 01 40 3202

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | SOOHONG KIM ET AL: "Blind space-time channel estimation of spread-spectrum using the minimum variance approach" PROCEEDINGS OF IEEE MILITARY COMMUNICATIONS CONFERENCE (MILCOM'00), vol. 1, 22 - 25 octobre 2000, pages 159-163 , XP002178930 IEEE, Piscataway, NJ, USA, ISBN: 0-7803-6521-6 * page 159, colonne 1, ligne 22 - colonne 2, ligne 8 * * page 160, colonne 1, ligne 5 - ligne 10 * * page 161, colonne 1, ligne 14 - colonne 2 * * page 163, colonne 1, ligne 8 - ligne 15 * | 1,2 | |
| A | | 3-8 | |
| X,D | VANDERVEEN M C ET AL: "IMPROVED BLIND CHANNEL IDENTIFICATION USING A PARAMETRIC APPROACH" IEEE COMMUNICATIONS LETTERS, IEEE SERVICE CENTER, PISCATAWAY,US, US, vol. 2, no. 8, 1 août 1998 (1998-08-01), pages 226-228, XP000778118 ISSN: 1089-7798 * le document en entier * | 1,7,8 | DOMAINES TECHNIQUES RECHERCHES (Int.Cl.7) |
| A | | 2-6 | |

Le présent rapport a été établi pour toutes les revendications

| Lieu de la recherche | Date d'achèvement de la recherche | Examinateur |
|---|---|---|
| LA HAYE | 25 mars 2002 | Moreno, M |

EPO FORM 1503 03.82 (P04C02)

**ANNEXE AU RAPPORT DE RECHERCHE EUROPEENNE
RELATIF A LA DEMANDE DE BREVET EUROPEEN NO.**     EP 01 40 3202

La présente annexe indique les membres de la famille de brevets relatifs aux documents brevets cités dans le rapport de recherche européenne visé ci-dessus.
Lesdits members sont contenus au fichier informatique de l'Officeeuropéen des brevets à la date du
Les renseignements fournis sont donnés à titre indicatif et n'engagent pas la responsabilité de l'Office européen des brevets.

25-03-2002

| Document brevet cité au rapport de recherche | Date de publication | Membre(s) de la famille de brevet(s) | Date de publication |
|---|---|---|---|
| EP 0926510 A | 30-06-1999 | FR 2773039 A1<br>EP 0926510 A1 | 25-06-1999<br>30-06-1999 |

EPO FORM P0460

Pour tout renseignement concernant cette annexe : voir Journal Officiel de l'Office européen des brevets, No.12/82